# DEMANDE DE BREVET EUROPEEN

(11) **EP 3 886 077 A1**
(43) Date de publication de la demande: **29.09.2021**
(21) Numéro de dépôt: 21164700.3
(22) Date de dépôt: 24.03.2021
(51) Int. Cl.: G08G 1/16, G08G 1/005, G08G 1/04, G08G 1/095, E01F 9/615, F21S 13/10, G01S 13/00, H04N 7/18

(54) **SYSTÈME ET PROCÉDÉ POUR LA DÉTECTION ET LE SIGNALEMENT DE L'ENGAGEMENT D'UN PASSAGE PIÉTON**

(30) Priorité: 25.03.2020 FR 2002905
(71) Demandeur: Saez, Jérôme, 07200 Lachapelle-sous-Aubenas (FR)
(72) Inventeur: Saez, Jérôme, 07200 Lachapelle-sous-Aubenas (FR)
(74) Mandataire: Nicolle, Olivier

(57) **Abrégé**

L'invention concerne un procédé de détection et de signalement de l'engagement d'un obstacle sur un passage piéton (2) et son système de mise en œuvre, comprenant les étapes suivantes :
S1 : détecter la présence d'un obstacle au niveau du passage piéton et son environnement immédiat via un module de détection de présence (5) d'obstacle (3) ;
-S12 : Mesurer la température de l'obstacle (3) dans la zone du passage piéton (2) ainsi détecté ;
-S13 : déterminer la nature de l'obstacle (3) à partir de sa température, à partir d'une table de gammes de valeurs connues caractéristiques de potentiels obstacles ;
-S14 : Si la température mesurée correspond à la gamme de température d'un type d'obstacle à signaler, mettre en œuvre les étapes comprenant :

S2 : signaler aux usagers de la route la présence d'un obstacle sur le passage piéton via l'activation de moyens de signalement (9) comprenant l'activation d'un élément d'éclairage bas (10), apte à éclairer la chaussée et le passage piéton (2), et au moins un autre élément de signalisation (9) à destination des usagers de la route ;
S3 : Activer un enregistrement vidéo du passage piéton et de l'environnement immédiat du passage piéton dès que la présence d'un obstacle est détectée sur le passage piéton via une caméra (25).

## Description

### DOMAINE DE L'INVENTION

La présente invention concerne les systèmes disposés sur la chaussée pour la sécurisation d'un passage piéton.

La présente invention vise à constituer un système permettant la sécurisation de la traversée d'un passage piéton par la surveillance et par le signalement aux usagers de la route lorsqu'un obstacle se trouve sur le passage piéton, notamment lorsqu'un piéton traverse dans un contexte de visibilité réduite.

De nombreux accidents chaque année sur les routes impliquent les piétons. Le nombre d'accidents impliquant les piétons subissant une augmentation constante chaque année, la sécurisation desdits piétons constitue un impératif majeur de sécurité.

D'autre part, de nombreuses études suggèrent que la majorité des accidents impliquant des piétons interviennent de jour par temps "normal" et en intersection, 95% de ceux-ci se produisent en agglomération. De nombreux facteurs externes réduisent en outre la vigilance et visibilité des usagers de la route vis-à-vis desdits piétons. La sécurisation des piétons doit donc aujourd'hui prendre en compte de nombreux facteurs pour être efficace.

### ÉTAT DE LA TECHNIQUE ANTÉRIEURE

On connaît des systèmes de sécurisation qui permettent d'alerter les usagers de la route de la présence d'un passage piéton, comme le document FR2858451 qui divulgue l'utilisation de signalements lumineux. Le document EP-925564 décrit une borne qui s'adresse au piéton pour lui indiquer de ne pas traverser. Ces systèmes d'alerte ne permettent pas d'alerter les usagers de la route, notamment les automobilistes, lorsqu'il y a effectivement un obstacle sur le passage piéton. En effet, beaucoup de passages piétons sont mal éclairés la nuit et beaucoup ne disposent pas de feux de signalisation pour alterner la circulation routière avec la traversée piétonne. Surtout, des obstacles peuvent se trouver sur le passage piéton malgré le panneau de signalisation, en particulier des animaux.

### RÉSUME DE L'INVENTION

L'invention a pour but de pallier au moins certains des inconvénients précités et de proposer un système à la fois à destination de la sécurisation des traversées par les piétons et celle du franchissement du passage piéton par les usagers de la route, par un signalement accru de la présence des obstacles piétons traversant.

L'invention a pour objet un procédé de détection et de signalement de l'engagement d'un obstacle sur un passage piéton.

Selon une définition générale de l'invention, le procédé selon l'invention comprend les étapes suivantes :
- S1 : détecter la présence d'un obstacle au niveau du passage piéton et son environnement immédiat via un module de détection de présence d'obstacle ;
- S12 : Mesurer la température de l'obstacle dans la zone du passage piéton ainsi détecté ;
- S13 : déterminer la nature de l'obstacle à partir de sa température, à partir d'une table de gammes de valeurs connues caractéristiques de potentiels obstacles ;
- S14 : Si la température mesurée correspond à la gamme de température d'un type d'obstacle à signaler, mettre en œuvre les étapes comprenant :
   -S2 :signaler aux usagers de la route la présence d'un obstacle sur le passage piéton via l'activation de moyens de signalement comprenant l'activation d'un élément d'éclairage bas , apte à éclairer la chaussée et le passage piéton, et au moins un autre élément de signalisation à destination des usagers de la route ;
   S3 : Activer un enregistrement vidéo du passage piéton et de l'environnement immédiat du passage piéton dès que la présence d'un obstacle est détectée sur le passage piéton via une caméra.

De manière surprenante, le Demandeur a observé que la combinaison d'étapes formée au moins de la détection de la présence d'un obstacle sur un passage piéton suivie immédiatement de la signalisation aux usagers de la route d'une telle présence et parachevée par l'enregistrement vidéo de la séquence permet d'améliorer drastiquement la sécurité des piétons et usagers de la route, d'une manière générale et plus particulièrement dans des conditions de faible visibilité.

Le procédé selon l'invention comprend une étape d'activation S0 du module de détection, précédant l'étape de détection S1, comprenant les sous-étapes suivantes :
- S01 : Mesurer les conditions de visibilité dans la zone de détection ;
- S02 : Comparer les mesures de visibilité à des seuils choisis ; et
- S03 : Si la visibilité mesurée est inférieure au seuil choisi, permettre l'activation des éléments d'éclairage bas si un piéton est détecté.

Le procédé selon l'invention comprend une étape d'activation S0 du module de détection, précédant l'étape de détection S1, comprenant les sous-étapes suivantes :
- S01 : Mesurer la luminosité ambiante grâce à un capteur de luminosité et les conditions de visibilité dans la zone de détection ;
- S02 : Comparer la luminosité ambiante mesurée à un seuil de luminosité crépusculaire choisi et les mesures de visibilité à des seuils choisis ; et
- S03 : Si la luminosité ambiante mesurée est inférieure au seuil de luminosité crépusculaire, ou que la visibilité mesurée est inférieure au seuil choisi, permettre l'activation des éléments d'éclairage bas si un piéton est détecté.

Selon un mode de réalisation de l'invention, l'étape de signalement comprend les sous-étapes suivantes :
- S21 : Activer les moyens de signalement pour les usagers de la route ; et
- S22 : Activer simultanément des moyens d'éclairage bas aptes à éclairer le passage piéton.

En pratique, les étapes de signalement et d'enregistrement vidéo prennent fin lorsque le piéton n'est plus détecté dans la zone couverte par les moyens de détection.

A titre d'exemple, les étapes de signalement S2 et d'enregistrement vidéo S3 prennent fin lorsque le piéton n'est plus détecté dans la zone couverte par les moyens de détection.

En pratique, l'étape S2 comprend la sous étape suivante :
- activer (S15) les moyens de communication du système, et communiquer les instructions de signalisation d'un piéton au niveau de la zone du passage piéton à au moins un dispositif tiers.

La présente invention a également pour objet un système de détection et de signalement de l'engagement d'un passage piéton, permettant la mise en œuvre du procédé du procédé conforme à l'invention.

Selon une autre définition de l'invention, le système comprend :
- un module de détection de présence, apte à détecter la présence d'un obstacle au niveau du passage piéton et de son environnement immédiat comportant un capteur infrarouge, apte à déterminer la température d'un obstacle ainsi détecté ;
- des moyens de signalement, aptes à permettre le signalement aux usagers de la route de la présence d'un obstacle présent sur le passage piéton, et permettre à l'usager de la route de distinguer ledit passage piéton depuis une distance choisie, et comprenant un élément d'éclairage bas, apte à éclairer la chaussée et le passage piéton , et au moins un autre élément de signalisation ;
- une caméra apte à permettre l'enregistrement vidéo du passage piéton et de son environnement immédiat dès qu'un obstacle à signaler est détecté ; et
- des moyens de traitement aptes à détecter la présence d'un obstacle au niveau du passage piéton ou son environnement immédiat via un module de détection de présence d'obstacle , déterminer la nature de l'obstacle à partir de sa température, à partir d'une table de gammes de valeurs connues caractéristiques de potentiels obstacles, si la détection d'obstacle est positive, et la température mesurée correspond à la gamme de température d'un type d'obstacle à signaler, et apte à signaler aux usagers de la route la présence d'un obstacle sur le passage piéton via l'activation d'un élément d'éclairage bas 10, apte à éclairer la chaussée et le passage piéton, et au moins un autre élément de signalisation ;et activer un enregistrement vidéo du passage piéton et de l'environnement immédiat du passage piéton dès que la présence d'un obstacle est détectée sur le passage piéton via une caméra .

Selon un mode de réalisation de l'invention, le système comprend en outre un détecteur de luminosité apte à mesurer la luminosité ambiante autour du système.

En pratique, comprend en outre moins un capteur de visibilité, configuré pour fournir des données de visibilité optique basées sur la réflexion de la lumière ainsi que la quantité de lumière, et mesurant la visibilité atmosphérique à partir de la lumière diffusée.

Les moyens de signalement comprennent en outre au moins un élément d'éclairage bas, apte à éclairer la chaussée et le passage piéton, et au moins un élément appartenant au groupe formé par panneau signalétique, balise à diode électroluminescente, bande de plusieurs diodes électroluminescentes.

A titre d'exemple, le module de détection appartient au groupe formé par détecteurs visuels, à émission infrarouge, radar, sonar.

Selon un mode de réalisation de l'invention, le système selon l'invention comprend des moyens de communication, aptes à transmettre un statut de détection d'un piéton dans la zone de détection à un dispositif tiers.

A titre d'exemple non limitatif, le dispositif tiers appartient au groupe formé par ordinateur de bord, smartphone intégrant une application d'itinérance, ou au moins un autre système selon l'invention appartenant au même groupe de systèmes.

Le système selon l'invention est configuré pour être connecté à au moins un autre système via les moyens de communications, formant un même groupe de systèmes, et apte à signaler de manière simultanée la présence d'un piéton détectée par un des systèmes à l'ensemble des membres du groupe.

En pratique, les moyens de signalisation sont activables de jour et de nuit.

L'invention sera mieux comprise à l'étude détaillée d'un mode de réalisation pris à titre d'exemple non limitatif et illustré par les dessins annexés, sur lesquels :
**[****Fig 1****]** représente schématiquement un système de détection et de signalement d'un piéton sur un passage piéton selon un mode de réalisation possible ;
**[****Fig 2****]** représente schématiquement un système de détection et de signalement d'un piéton sur un passage piéton selon un mode de réalisation particulier comprenant un détecteur infrarouge ;
**[****Fig 3****]** représente schématiquement la caméra, la détection et la signalétique du système de la Figure 1 ;
**[****Fig 4****]** représente schématiquement l'intérieur du système de la Figure 1;
**[****Fig 5****]** représente schématiquement un système de détection et de signalement d'un piéton sur un passage piéton selon un mode de réalisation possible ;
**[****Fig 6****]** représente schématiquement une installation comprenant un groupe de système de détection et de signalement d'un piéton sur un passage piéton selon l'invention ;
**[****Fig 7****]** représente schématiquement une vue de dessus d'une installation comprenant un groupe de systèmes de détection et de signalement d'un piéton sur un passage piéton selon l'invention ;
**[****Fig 8****]** représente schématiquement une vue de dessus des zones de couverture des caméras d'une installation comprenant un groupe de systèmes de détection et de signalement d'un piéton sur un passage piéton selon l'invention ;
**[****Fig 9****]** représente schématiquement une vue de dessus des zones de couverture des moyens de détection infrarouge d'une installation comprenant un groupe de systèmes de détection et de signalement d'un piéton sur un passage piéton selon l'invention ;
**[****Fig 10****]** représente schématiquement une vue de dessus d'une installation comprenant un groupe de systèmes selon l'invention disposé sur un premier système routier deux fois deux voies à circulation alternée ;
**[****Fig 11****]** représente schématiquement une vue de dessus d'une installation comprenant un groupe de systèmes selon l'invention disposé sur un second système routier deux fois deux voies ;

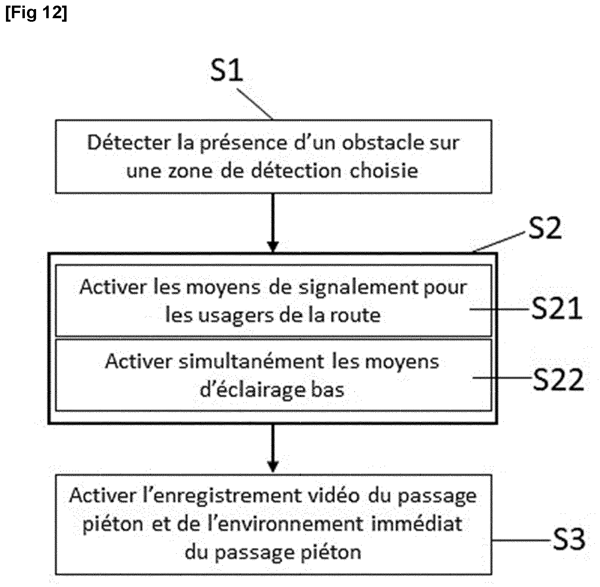

**[****Fig 12****]** représente schématiquement les étapes du procédé mis en œuvre par le système de la Figure 1 ;

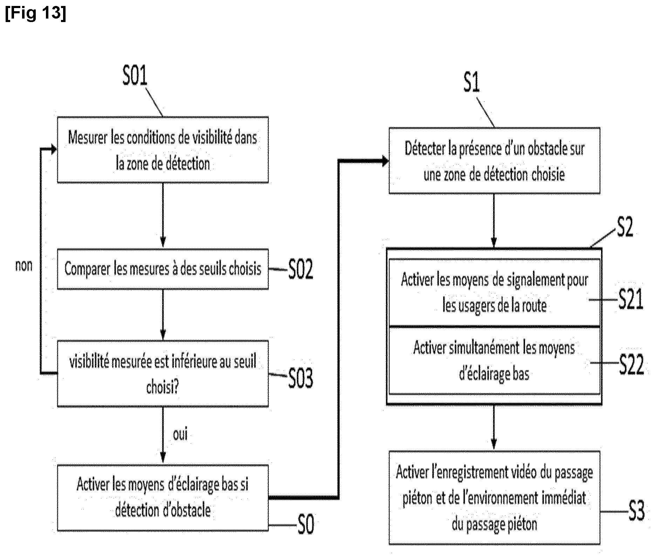

**[****Fig 13****]** représente schématiquement un premier mode de réalisation du procédé selon l'invention ;

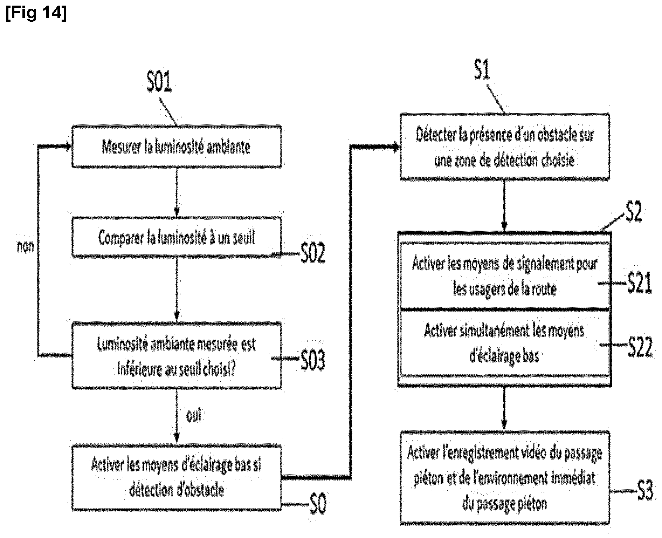

**[****Fig 14****]** représente schématiquement un second mode de réalisation du procédé selon l'invention ;

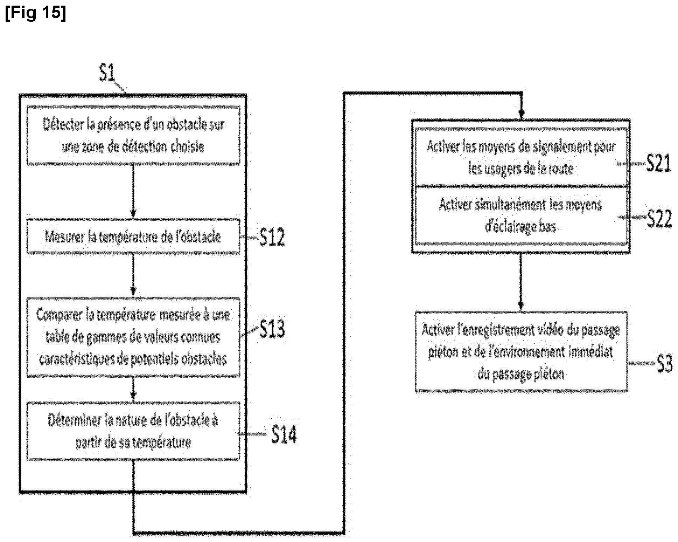

**[****Fig 15****]** représente schématiquement un troisième mode de réalisation du procédé selon l'invention ;

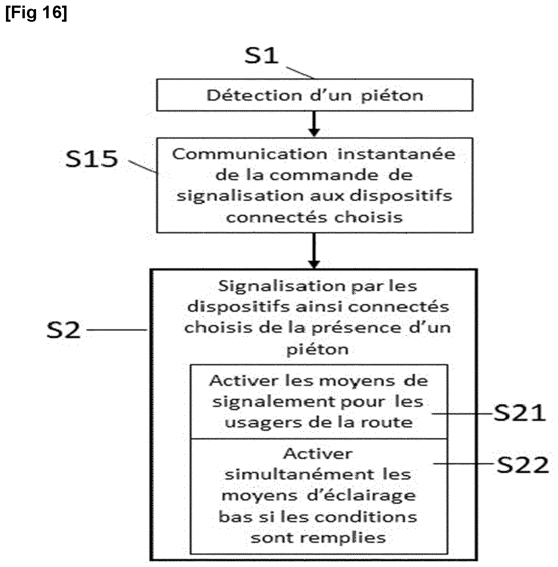

**[****Fig 16****]** représente schématiquement une mise en œuvre particulière du procédé selon l'invention ;

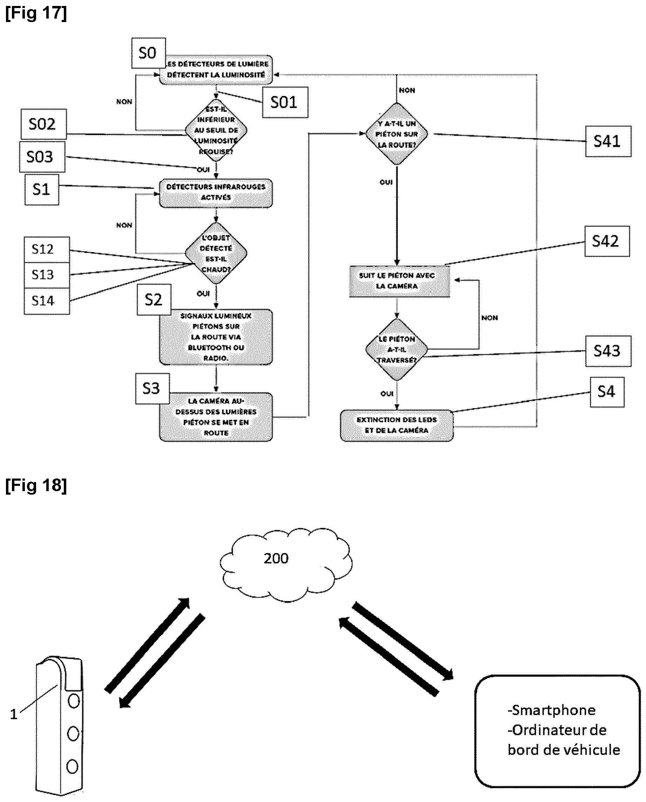

**[****Fig 17****]** représente schématiquement un mode de réalisation du procédé en réseau selon l'invention ; et
**[****Fig 18****]** représente schématiquement la structure réseau du système selon l'invention.

### DESCRIPTION DETAILLEE DES FIGURES

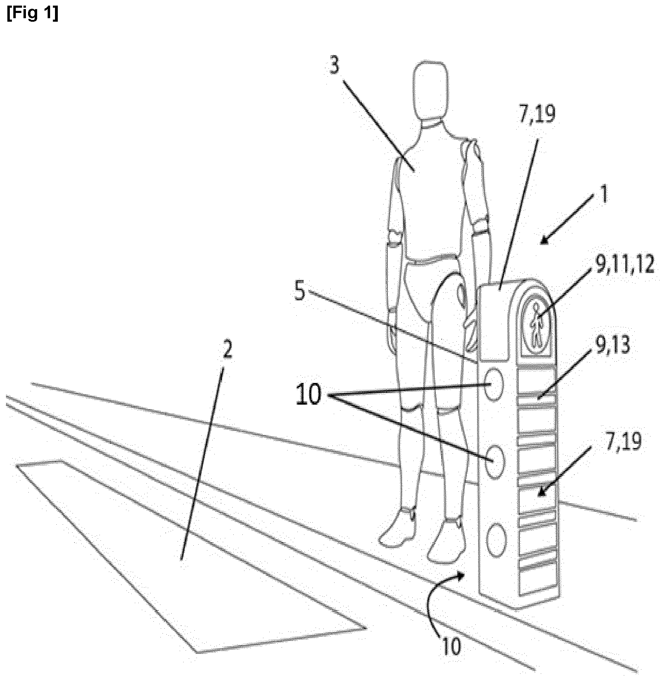

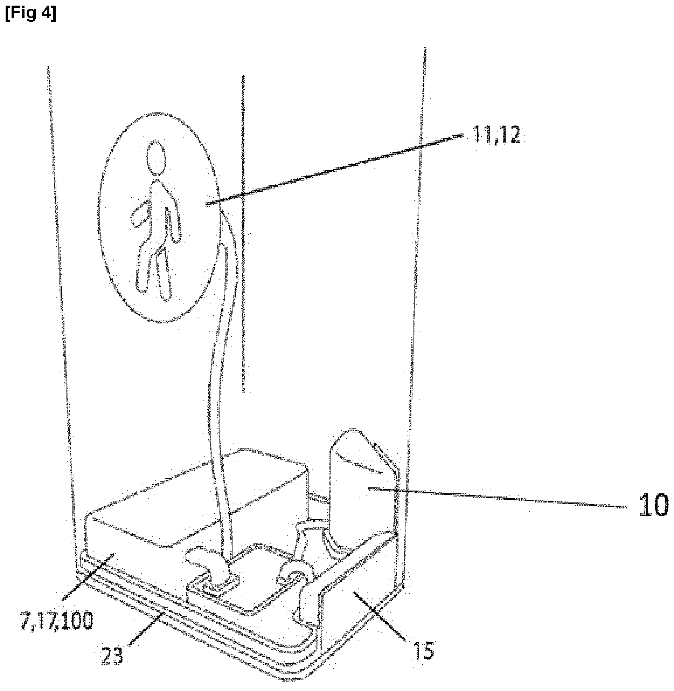

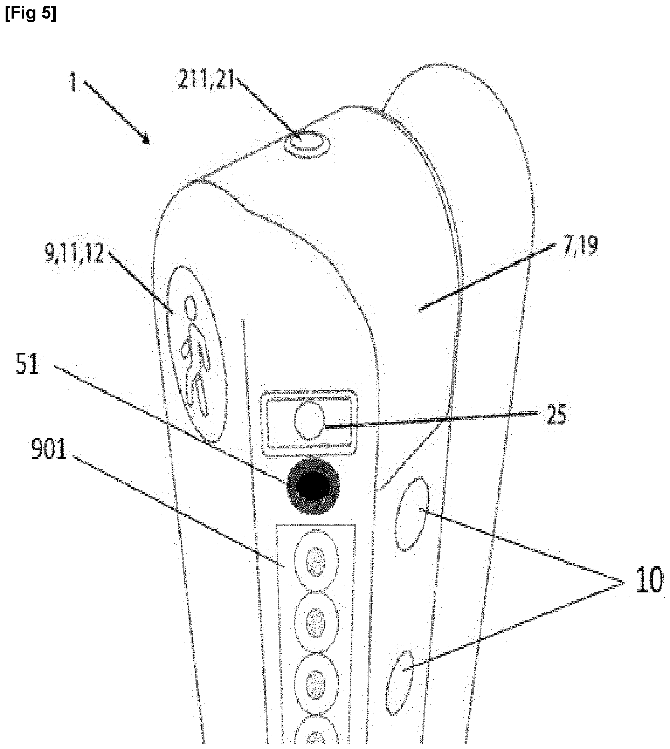

En référence aux figures 1 à 5, le système 1 de détection selon l'invention permet le signalement de l'engagement d'un passage piéton 2 par un obstacle 3 aux usagers de la route.

Le système 1 est prévu pour être disposé en bordure de route et à proximité d'un passage piéton 2.

A cet effet, il comprend un coffrage, ayant par exemple une coque en polycarbonate, permettant de protéger ses composants internes.

La coque en polycarbonate est fabriquée par injection. Elle permet de rendre le système 1 imperméable selon la norme IPX65.

Le système selon l'invention comprend une source d'alimentation électrique 7.

Selon un premier mode de réalisation de l'invention, la source d'alimentation électrique 7 comprend une arrivée filaire raccordée depuis le sol à un réseau de distribution électrique.

Selon un second mode de réalisation de l'invention, la source d'alimentation électrique 7 comprend un accumulateur 17 et au moins un panneau photovoltaïque 19.

Selon un mode de réalisation alternatif, le panneau photovoltaïque 19 est disposé sur une structure porteuse de type poteau à proximité du corps du système 1 et connecté à celui-ci afin d'assurer l'alimentation électrique.

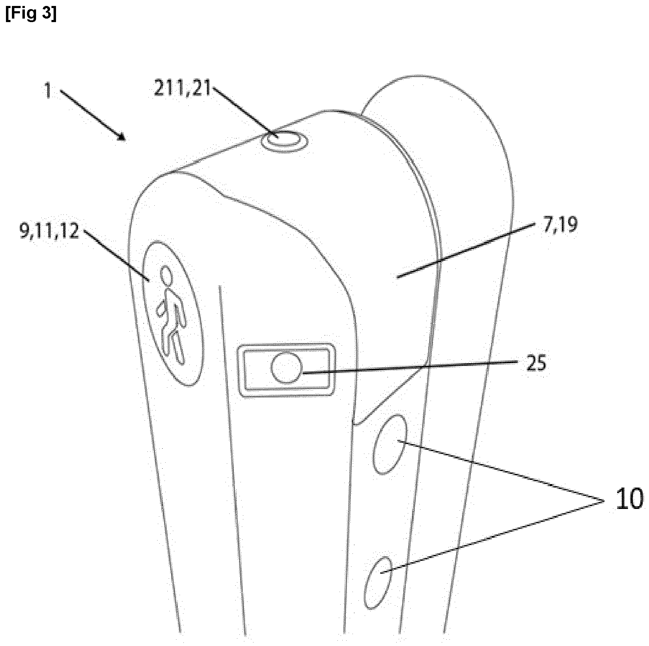

L'alimentation 7 peut également être faite toute ou en partie par un accumulateur électrique 17 compris dans le système 1 comme illustré en Figure 3.

L'accumulateur électrique 17 peut consister en des condensateurs électriques, ou en une batterie électrique, par exemple une batterie de grande capacité en lithium.

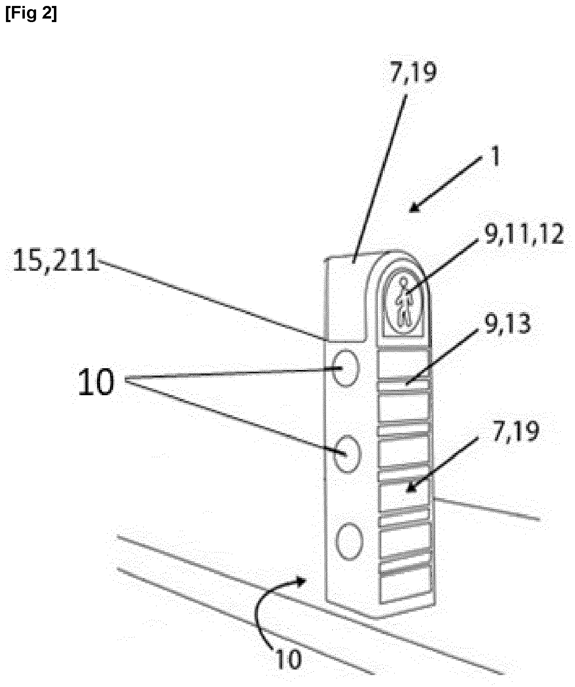

L'alimentation électrique 7 peut également être faite partiellement ou entièrement par un panneau photovoltaïque 19 disposé sur au moins une face extérieure du système 1, préférentiellement sur une face supérieure, comme illustré en Figure 2.

Le système 1 comprend en outre un module de détection de présence 5 d'un obstacle 3 sur le passage piéton 2.

Par obstacle 3, on entend tout élément susceptible de faire obstruction au franchissement continu d'un véhicule arrivant depuis la route sur le passage piéton 2. Par exemple, un obstacle 3 est un piéton 3 en train de traverser, ou encore un animal, ou un véhicule (2 roues, 3 roues, 4 roues et autres) arrêté.

En outre, le système 1 comprend des moyens de signalement 9 de la présence d'un obstacle 3 détecté par le module de détection 5.

Le système 1 peut prévoir que les éléments électroniques, notamment les éléments d'alimentation, de détection ou de signalement, soient réalisés de manière étanche pour une meilleure résistance en environnement extérieur.

Le module de détection 5 comprend des détecteurs et capteurs orientés vers l'extérieur de la borne et vers le passage piéton.

Il peut s'agir de tout détecteur connu par l'homme du métier qui permet d'obtenir un état positif de détection de présence dans une zone donnée.

Par exemple, on pourra utiliser des détecteurs visuels, à émission infrarouge, radar, sonar ou analogues, qui permettent une détection à distance d'un obstacle 3. La zone ainsi surveillée englobe l'intégralité du passage piéton 2 et s'étend par exemple en hauteur à hauteur d'homme et au sol jusqu'aux trottoirs adjacents au passage piéton 2.

Avantageusement, le module de détection de présence 5 comprend un capteur infrarouge 15, qui permet, outre la détection de présence, de déterminer la température d'un obstacle 3 détecté.

Ainsi, on peut prévoir que la détection d'obstacle 3 est complétée par la détermination de la nature de l'obstacle 3 à partir de sa température, à partir d'une table de gammes de valeurs connues caractéristiques de potentiels obstacles. On prévoit notamment qu'une détection de présence humaine sur la passage piéton 2 est toujours apte à activer des moyens de signalement 9, dont la température est estimable, tandis qu'un insecte ou une feuille d'arbre qui passerait devant le détecteur de présence 5 n'active pas les moyens de signalement 9.

Les moyens de détection 5 peuvent émettre le signal de détection à des moyens de traitement 100 couplés aux moyens de signalement 9 pour leur activation à destination des usagers de la route circulant notamment dans le sens prescrit sur une voie de circulation traversée par le passage piéton.

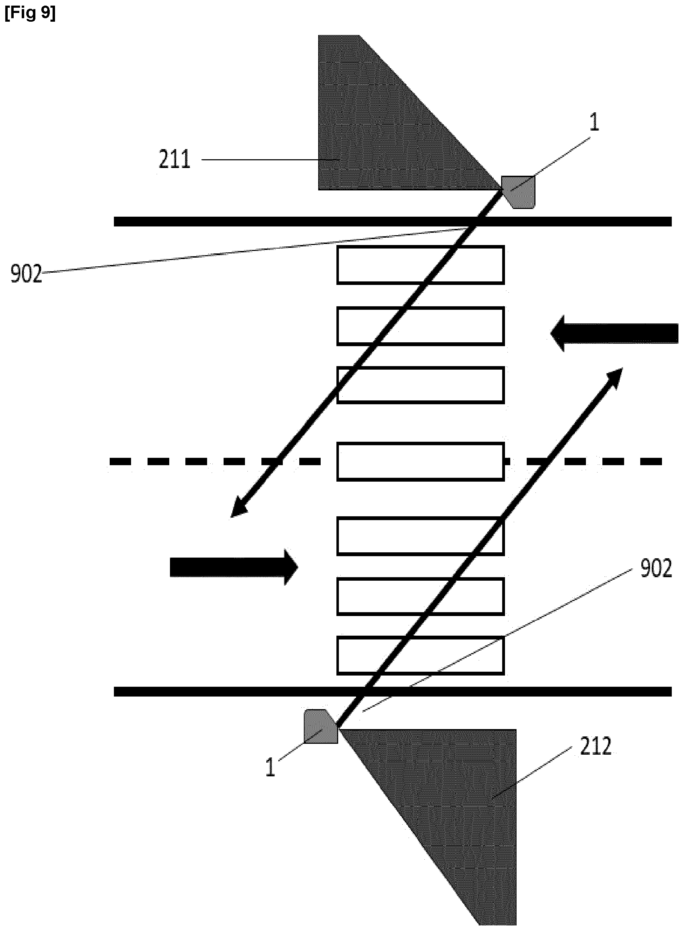

En référence à la **figure 9****,** une telle détection par le capteur infrarouge 15 est mise en œuvre en continu, et couvre au moins une zone choisie 211, 212 correspondants à une zone choisie 211, 212 dont la localisation exclue la route.

Cette zone choisie appartient au groupe formé par trottoir, zone précédent le passage piéton, bas-côté, et toute zone assimilable à celles-ci.

Le capteur infrarouge permet en outre de fournir une zone de surveillance de confirmation, permettant une précision de détection optimisée.

Avantageusement, la confirmation de détection par infrarouge permet en outre d'éviter les faux positifs et ainsi activer les moyens de signalisation 9 sans qu'un piéton ne soit actuellement autour du passage piéton à surveiller.

Une telle fonction permet en outre de limiter la consommation énergétique du système 1.

Cette stratégie d'économie d'énergie devant d'autant plus critique en cas d'alimentation électrique de type photovoltaïque. On peut notamment prévoir de doubler le système 1 en cas de circulation à double sens.

Les éléments de signalement et de détection peuvent être réalisés par des circuits logés dans des blocs modulaires de manière à faciliter la réparation et le remplacement des composants, ainsi que la récupération d'importantes informations dans le système 1, telles que des enregistrements d'éventuels accidents survenant à proximité du système 1.

Les moyens de signalement 9 comprennent par exemple un panneau signalétique 11.

Le panneau 11 peut être monté fixe ou pivotant sur le système 1. Il est préférentiellement disposé à la hauteur des yeux des automobilistes arrivant au passage piéton 2.

Il peut consister en un panneau signalétique 11 standard du code de la route, ou en un signalement défini par l'homme du métier pour symboliser un piéton par un code souhaité universellement compréhensible.

Les moyens de signalement 9 peuvent comprendre une balise à diode électroluminescente 12, comme illustré en Figure 3. Ainsi, le panneau signalétique 11 est rétroéclairé par une diode centrale de manière à le rendre visible à plusieurs centaines de mètres par un usager de la route. A cet effet, le panneau signalétique 11 est réalisé au moins partiellement en matériau semi-translucide.

Par exemple, le panneau signalétique 11 est réalisé dans une plaque acrylique dépolie, réalisée par injection, et permettant la diffusion d'un côté vers l'autre de lumière.

Les moyens de signalement 9 peuvent comprendre en outre, comme illustré en Figure 2, une bande de plusieurs diodes électroluminescentes 13, éventuellement multicolores, un groupement LED 901.

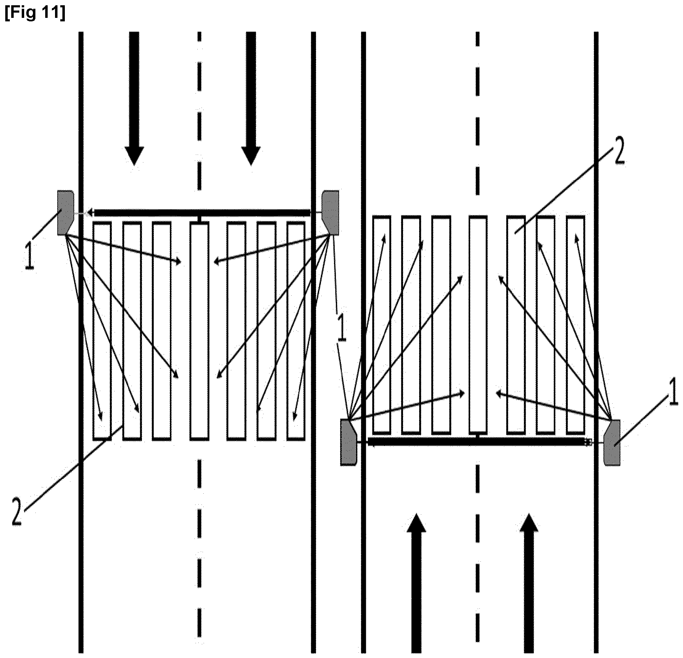

En référence à la **figure 11****,** selon un mode particulier de réalisation de l'invention, le groupement LED 901 est configuré pour éclairer, dans un groupement de systèmes 1, de manière à augmenter la visibilité de signalisation pour les usagers de la route se trouvant derrière un obstacle cachant au moins un des systèmes 1 du groupe de système selon un angle α choisi 902.

Les choix des rubans de diodes électroluminescentes 13 en parallèle permet de minimiser la consommation électrique et de réaliser une signalisation étendue sur le système 1, de manière à le délimiter, et à réaliser un signalement particulièrement lointain. Les moyens de signalement 9 peuvent comprendre en outre au moins une surface extérieure photo-réfléchissante.

Ces surfaces permettent un auto-éclairage du système 1 qui soit toujours fonctionnel, indépendamment de l'alimentation électrique 7, et qui s'intensifie dès lors qu'il est éclairé, notamment la nuit par exemple par les phares de véhicules survenant ou par l'éclairage lunaire.

Selon un mode particulier de réalisation de l'invention, les moyens de signalisation peuvent intégrer de manière supplémentaire des éléments d'alarme sonore apte à être activé lors de la détection d'un piéton et désactivé lorsque le piéton n'est plus détecté.

En pratique, tous les moyens de signalisation 9 ainsi décrits sont orientés vers la route en fonction du sens de circulation de manière à permettre un signalement efficace aux usagers de la route se rapprochant dudit système.

Les moyens de signalement 9 peuvent également comprendre un élément d'éclairage bas 10 de la chaussée et du passage piéton 2.

L'élément d'éclairage bas 10 permet d'éclairer le passage piéton 3, ce qui sécurise le piéton 3 qui traverse visiblement, en pleine lumière, et non plus dans l'obscurité comme c'est le cas dans les systèmes connus de l'art antérieur.

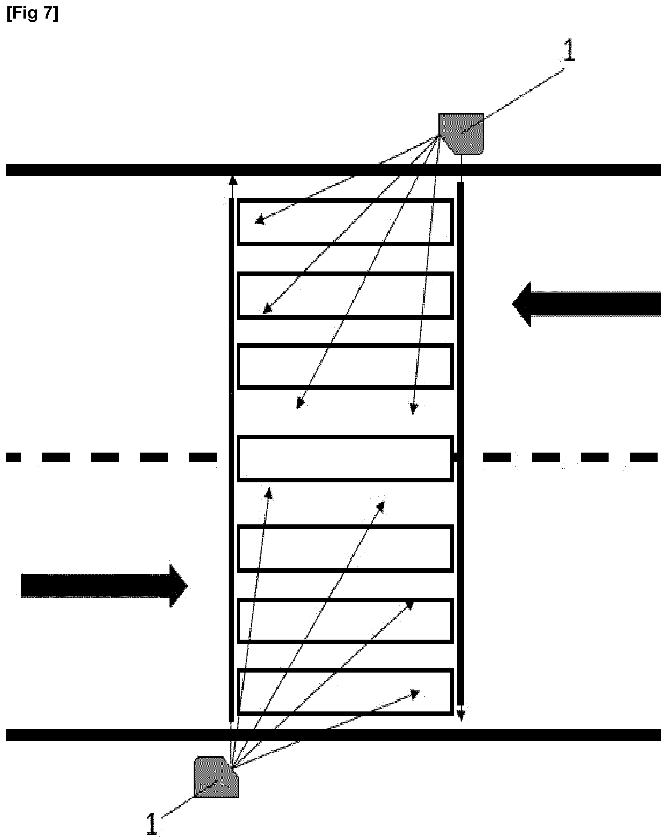

En référence à **la** **figure 7****,** Les éclairages bas 10 sont orientés vers les marquages du passage piéton permettant ainsi l'éclairage de celui-ci tout en augmentant le contraste de celui-ci par rapport à la route et augmentant ainsi la distance jusqu'à laquelle ledit passage piéton est visible, ainsi que la visibilité du piéton traversant.

Selon un mode de réalisation particulier de l'invention, les moyens d'éclairage bas 10 sont configurés pour être activés lorsque les conditions de visibilité ne sont pas optimales et que la visibilité est inférieure à un seuil donné.

On définit des conditions de visibilité non optimale comme toute condition de visibilité diminuant la visibilité des usagers de la route et altérant le temps de réaction, la visibilité, et/ou l'adhérence à la route.

A titre d'exemple non limitatif, les conditions de visibilité non optimale appartiennent au groupe formé par fumée, poussière, brume, brouillard, pluie ou neige. A ce titre, les éléments d'éclairage bas 10 peuvent donc fonctionner de jour comme de nuit lorsqu'un piéton est détecté.

Les moyens de signalement 9 peuvent comprendre des moyens de communication, tel que des moyens d'émissions télémétriques, par radio RF ou Bluetooth ® par exemple, permettant le signalement de l'obstacle 3 sur le passage piéton 2 à des usagers de la route, et/ou que des moyens de connexion réseau de télécommunication 200 de type 2G, 3G, 4G, 5G ou similaire.

Les moyens d'émission télémétriques permettant d'une part de communiquer la détection d'un piéton à au moins un autre système 1 conforme à l'invention, afin que celui-ci active également ses moyens de signalisation.

D'autre part, en cas de détection, le système 1 conforme à l'invention peut émettre un message d'alerte accompagnée d'une position GPS dudit système via ses moyens de communication, paramétrés par exemple pour une application logicielle d'itinérance non limitativement de type google map, waze, coyote, garmin ou similaire, ou encore pour émettre ce signalement vers un serveur distant apte à être connecté à l'ordinateur de bord d'un véhicule, d'un véhicule semi-autonome ou autonome.

Selon un mode particulier de réalisation de l'invention, les moyens de signalement 9 comprennent en outre au moins un élément d'éclairage bas 10, apte à éclairer la chaussée et le passage piéton 2, et au moins un élément appartenant au groupe formé par panneau signalétique 11, balise à diode électroluminescente 12, bande de plusieurs diodes électroluminescentes 13

En pratique, le système 1 selon l'invention comprend au moins un capteur de visibilité 51. Le capteur de visibilité 51 est configuré pour fournir des données de visibilité optique basées sur la réflexion de la lumière ainsi que la quantité de lumière, et mesurant la visibilité atmosphérique à partir de la lumière diffusée dans l'air par des particules telles que la fumée, la poussière, la brume, le brouillard, la pluie ou la neige.

Lorsque le capteur de visibilité mesure la visibilité aux abords du passage piéton, il compare les données obtenues à au moins un seuil choisi. Si les données sont inférieures au seuil de visibilité, alors les moyens d'éclairages bas sont activés lors de la détection d'un piéton.

En pratique, le capteur de visibilité 51 est basé sur une mesure infrarouge diffusée vers l'avant, la mesure étant basée sur l'étude de la diffusion optique.

A titre d'exemple particulier non limitatif de l'invention, les optiques sont inclinées avec un angle choisi par rapport à l'horizontal, donnant ainsi des évaluations précises de la gamme d'observation météorologique (MOR - Meteorological Observable Range) et plus particulièrement pour le brouillard et la neige.

En pratique, les optiques sont inclinées avec un angle de 45° par rapport à l'horizontal.

Avantageusement, de tels moyens permettent d'améliorer la sécurité de traversée des piétons en améliorant la visibilité du passage piéton et du piéton lui-même tout en adaptant son fonctionnement aux conditions de visibilité de la zone à protéger, et additionnellement permet en outre d'optimiser la consommation énergétique du système 1 selon l'invention.

Le système 1 comprend en outre un détecteur de luminosité 211, comme illustré en Figure 2.

Le système selon l'invention comprend des moyens de traitement 100 aptes à détecter la présence d'un obstacle au niveau du passage piéton ou son environnement immédiat via un module de détection de présence 5 d'obstacle 3, si la détection d'obstacle est positive, signaler aux usagers de la route la présence d'un obstacle sur le passage piéton via l'activation de moyens de signalement 9, et activer un enregistrement vidéo du passage piéton et de l'environnement immédiat du passage piéton dès que la présence d'un obstacle est détectée sur le passage piéton via une caméra 25.

Le détecteur de luminosité 211 permet de détecter la luminosité ambiante et d'activer certaines fonctionnalités électroniques du système 1, tel que l'activation de l'élément d'éclairage bas 10 lors de la détection d'au moins un piéton par ledit système 1, seulement si la valeur de luminosité mesurée est inférieure à une valeur seuil de luminosité choisi.

Par exemple, la valeur seuil de luminosité correspond à une luminosité crépusculaire à partir de laquelle la luminosité est considérée comme insuffisante pour l'homme.

Dans ce cas, lors de la détection d'un piéton par le système 1, les éléments d'éclairage bas 10 seront également activés.

La valeur seuil de déclenchement d'une détection positive par le détecteur de luminosité 211 peut être corrélée à l'heure locale du système 1, connue par exemple par une horloge ou un compteur couplé aux moyens de traitement 100 ou au module de détection 5.

On minimise ainsi la consommation énergétique du système 1 par sa désactivation en condition de luminosité suffisante, et on peut en outre maximiser son efficacité par la modulation de l'intensité du signalement émis en fonction de la luminosité ambiante.

Selon un mode de réalisation, le détecteur de luminosité 211 est couplé au capteur de visibilité 51, permettant ainsi de mesurer la luminosité ainsi que le degré de visibilité de manière combinée et établir un indice de visibilité conjugué afin d'activer ou non au moins un éclairage bas 10 lorsqu'un piéton est détecté.

Le système 1 peut comprendre en outre des moyens d'ancrage 23 dans la chaussée dudit système 1.

On prévoit par exemple un ancrage dans la chaussée par lestage par de l'acier ou par vissage dans la chaussée pour sécuriser la tenue en place du système 1.

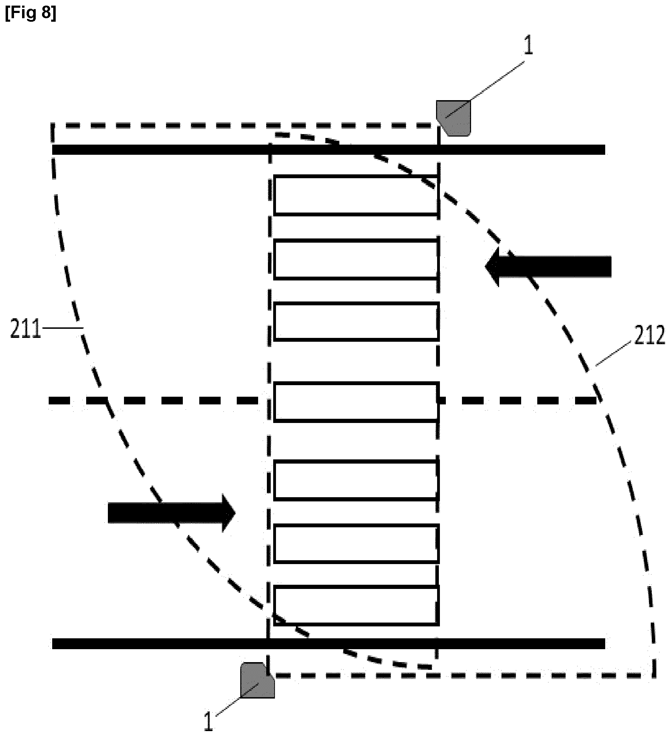

En référence aux **figures 3****,** **5** **et** **8****,** le système 1 peut être équipé d'une caméra 25 scrutant une zone haute englobant le passage piéton 2.

La caméra 25 peut être activée lors de l'activation des moyens de signalement 9. Elle permet de filmer un éventuel accident susceptible de survenir sur le passage piéton 2 et de filmer ou photographier un véhicule 100 y participant, ce qui permet de donner un effet particulièrement dissuasif du système 1 à l'encontre des usagers de la route qui ne ralentiraient pas à leur arrivée au passage piéton 2.

Selon un mode particulier de l'invention, la caméra 25 est disposée sur la tranche du système 1, permettant ainsi à celle-ci d'être orientée à 45° dans le sens de circulation, permettant ainsi de couvrir le passage piéton 2 ainsi que les véhicules passant soit en permettant d'identifier lesdits véhicules par l'avant, soit par l'arrière selon leur sens de circulation.

L'enregistrement vidéo via la caméra 25, comprend trois modes de mise en œuvre parmi lesquels un mode détection, un mode hybride, et un mode continu.

Selon un premier mode de réalisation de l'invention, le système met en œuvre l'enregistrement vidéo selon le mode détection, dans lequel l'enregistrement vidéo commence lorsqu'un piéton est détecté et s'arrête lorsqu'aucun piéton n'est détecté.

Selon un second mode de réalisation de l'invention, le système met en œuvre l'enregistrement vidéo selon le mode continu, dans lequel l'enregistrement vidéo est continu et si aucun incident n'est enregistré sur une période donnée, les données sont écrasées afin de libérer l'espace de stockage nécessaire à un nouvel enregistrement.

Selon un troisième mode de réalisation de l'invention, le système met en œuvre l'enregistrement vidéo selon le mode hybride, dans lequel l'enregistrement est continu, et lorsqu'un un piéton est détecté puis que la détection prend fin, le système selon l'invention effectue un marquage temporel des deux événements, seules sont stockées et enregistrées les données vidéos correspondant à une durée t avant détection du piéton, et une durée t après fin de détection, le reste des données étant écrasé, les données sont écrasées afin de libérer l'espace de stockage nécessaire à un nouvel enregistrement.

En pratique la caméra sera cachée dans le système de manière à ne pas être visible par les usagers et piéton et ainsi éviter tout dommage volontaire.

En référence à la figure 7, l'élément d'éclairage bas 10 de la chaussée et du passage piéton 2 peut être prévu pour éclairer favorablement toute la zone scrutée par la caméra 25.

Selon un mode particulier de réalisation de l'invention, le système 1 comprend un bouton poussoir 21, apte à permettre l'activation de tous les éléments du système 1 mimant une détection de piéton pour une durée déterminée. Lorsqu'un utilisateur appuie sur ledit bouton poussoir 21, le système 1 est activé qu'il fasse jour ou nuit, et est destiné aux enfants, ou aux personnes malvoyantes afin de garantir leur sécurité. Le bouton pouvant être accompagné d'un message adapté aux malvoyants de type braille.

Selon un autre mode particulier de réalisation de l'invention, le système 1 comprend un bouton poussoir 21 dans lequel est intégré le capteur de luminosité 211.

En pratique le système selon l'invention est configurée pour être érigé à hauteur d'homme, et plus particulièrement à une hauteur choisie pour permettre de ne pas cacher le piéton disposé derrière celui-ci, permettant ainsi aux usagers de la route de distinguer ledit piéton clairement, résolvant ainsi l'un des problèmes majeurs des systèmes de signalisation actuels. En effet, les moyens de sécurisation piétons érigent souvent des poteaux de grande hauteur masquant au moins partiellement les piétons, et augmentant ainsi le risque de collision avec les usagers de la route.

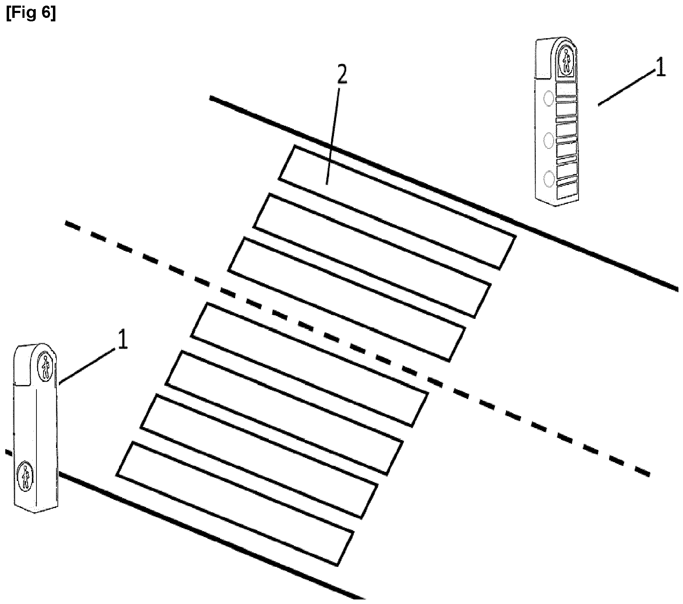

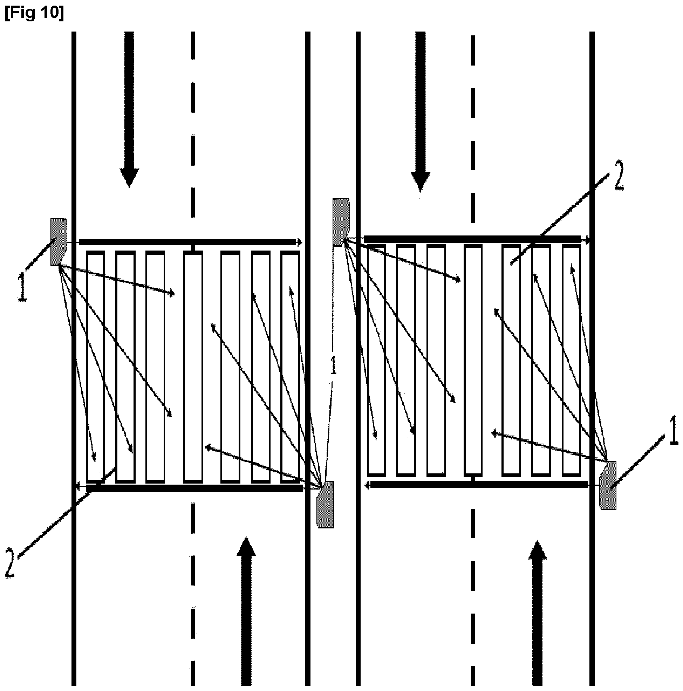

En référence aux figures 6 à 10, le système 1 selon l'invention peut être déployé en au moins deux unités, chaque système étant disposé sur un bord de route opposé à l'autre. A titre d'exemple, on retrouve cette disposition de multiples unités lors de configurations pour des voies à double sens, ou une multitude de voies séparées par un terre-plein central, permettant ainsi d'obtenir une surveillance bilatérale et à 360° du passage piéton.

Chaque système 1 est connecté aux autres membres du groupe de systèmes 1 par ses moyens de communication, tel que des moyens d'émissions télémétriques, par radio RF ou Bluetooth ® par exemple, communiquant ainsi les états de détection aux autres membres du groupe de systèmes 1, permettant ainsi le signalement de l'obstacle 3 sur le passage piéton 2 à des usagers de la route via chaque système 1 de manière simultanée.

Avantageusement, une mise en réseau local d'un groupe de systèmes conformes à l'invention permet une signalisation de la présence de piétons dans les deux ou plus sens de circulation pour les usagers de la route et aide à prévenir les lacunes de signalisations pouvant intervenir lorsqu'un obstacle cache le système assurant la signalisation de ce côté de la route.

Une telle configuration permet également de multiplier la portée des zones de surveillance vidéo, ainsi que de détection des piétons, tout en garantissant une sécurisation renforcée de la traversée du passage piéton.

En outre, lorsque les éléments d'éclairage bas 10 de chaque dispositif est activé, l'illumination des bandes du passage piéton permet d'accentuer d'autant plus la visibilité de celui-ci, ainsi que du piéton le traversant.

Selon un mode de réalisation particulier conforme à l'invention, les systèmes appartenant au même groupe peuvent être paramétrés pour ne communiquer qu'entre eux, lorsque plusieurs groupes de systèmes 1 indépendants conformes à l'invention se trouve à proximité les uns des autres.

La signalisation de groupe engendrée par la détection d'un piéton sera donc uniquement mise en œuvre par les membres d'un même groupe préalablement défini.

Selon un mode de réalisation de l'invention, chaque membre d'un groupe de système est orienté dans le sens de circulation du côté ou il est disposé, permettant ainsi un effet combinatoire de sécurisation et de précision de détection d'obstacle dans la zone de surveillance.

La zone de surveillance telle que définie pour chaque système 1 est le passage piéton, ses abords sur et en dehors de la route dans une proximité immédiate de celle-ci.

Selon un autre mode particulier de réalisation de l'invention, le système selon l'invention comprend des moyens de temporisation, aptes à être activés dès lors qu'un piéton est positivement détecté par le système 1, et configurés pour permettre le maintien de l'activation des moyens de signalisation 9 pendant un délai Δt, au bout duquel les moyens de signalisation 9 sont désactivés.

Le procédé de détection et de signalement de l'engagement d'un obstacle sur un passage piéton 2 selon l'invention comprend une première étape S1 de détection de la présence d'un obstacle au niveau du passage piéton et son environnement immédiat via un module de détection de présence 5 d'obstacle 3.

L'étape de détection S1 comprend les sous-étapes suivantes :
- S11 : Détecter la présence d'un obstacle grâce aux moyens de détection ;
- S12 : Mesurer la température de l'obstacle 3 dans la zone du passage piéton 2 grâce à un détecteur infrarouge 15 ; et
- S13 : déterminer la nature de l'obstacle 3 à partir de sa température, à partir d'une table de gammes de valeurs connues caractéristiques de potentiels obstacles ;
- S14 : Si la température mesurée correspond à la gamme de température d'un type d'obstacle à signaler, mettre en œuvre les étapes de signalement S2 et d'enregistrement S3.

En pratique, si on détermine une présence positive d'obstacle 3, dès lors que la température mesurée correspond à un obstacle pertinent, notamment un piéton 3, l'étape de signalement S2 est mise en œuvre immédiatement.

Le procédé selon l'invention comprend ensuite une étape S2 consistant à signaler aux usagers de la route la présence d'un obstacle sur le passage piéton via l'activation de moyens de signalement 9 si la détection d'un obstacle est positive.

Selon un mode de réalisation de l'invention, l'étape de signalement S2 comprend la sous-étape suivantes :
- S21 : Activer les moyens de signalement 9 pour les usagers de la route.

Selon un mode de réalisation alternatif de l'invention, l'étape de signalement S2 comprend les sous-étapes suivantes :
- S21 : Activer les moyens de signalement 9 pour les usagers de la route ; et
- S22 : Activer simultanément des moyens d'éclairage bas 10 aptes à éclairer le passage piéton si les conditions de visibilités mesurées sont inférieures à la valeur seuil choisie.

Selon un mode de réalisation de l'invention, lors de l'étape S2, les moyens de traitement 100 peuvent notamment activer S15 immédiatement les moyens de signalement 9 de types télémétriques par Bluetooth ® ou par radiofréquences ou moyens de communication, afin de communiquer les instructions de signalisation d'un piéton au niveau de la zone du passage piéton à au moins un dispositif tiers tel qu'un ordinateur de bord, un smartphone intégrant une application d'itinérance, ou au moins un système 1 selon l'invention annexe. Ledit autre système 1 selon l'invention appartenant au même groupe prédéfini de systèmes de détection pour permettre l'activation et la signalisation simultanée de tous les systèmes 1 appartenant ainsi au même groupe, à destination des usagers de la route de la présence d'un piéton.

Alternativement, selon la sous étape S15, la communication par les moyens de communication du système 1 via un réseau de télécommunication 200 est destinée à au moins un serveur distant apte à être connecté avec au moins un ordinateur de bord d'un véhicule 100.

Le procédé selon l'invention comprend en outre une étape S3 consistant à activer un enregistrement vidéo du passage piéton et de l'environnement immédiat du passage piéton dès que la présence d'un obstacle est détectée sur le passage piéton via une caméra 25.

En pratique, les étapes de signalement S2 et d'enregistrement vidéo S3 prennent fin lorsque le piéton n'est plus détecté dans la zone couverte par les moyens de détection.

Le procédé selon l'invention comprend en outre une étape S4 de désactivation du signalement S2 et de l'enregistrement S3.

Selon un second mode de réalisation de l'invention, le procédé met en œuvre l'étape d'enregistrement vidéo S3 selon le mode continu, dans lequel l'enregistrement vidéo est continu et si aucun incident n'est enregistré sur une période donnée, les données sont écrasées afin de libérer l'espace de stockage nécessaire à un nouvel enregistrement.

Selon un troisième mode de réalisation de l'invention, le procédé met en œuvre l'étape d'enregistrement vidéo S3 selon le mode hybride, dans lequel l'enregistrement est continu, et lorsqu'un un piéton est détecté puis que la détection prend fin, le système selon l'invention effectue un marquage temporel des deux événements, seules sont stockées et enregistrées les données vidéos correspondant à une durée t avant détection du piéton, et une durée t après fin de détection, le reste des données étant écrasé, les données sont écrasées afin de libérer l'espace de stockage nécessaire à un nouvel enregistrement.

L'étape de désactivation S4 comprend les sous-étapes suivantes :
- S41 : Détecter l'obstacle sur le passage piéton ;
- S42 : Si l'obstacle est détecté sur le passage piéton, activer le mode enregistrement de la caméra et suivre l'obstacle avec la caméra 25 ;
- S43 : Détecter si la traversé du passage piéton par l'obstacle est finie ; et
- S44 : Si la fin de traversée est détectée, désactiver les moyens de signalement 9, et le mode enregistrement de la caméra 25.
Selon un autre mode particulier de réalisation de l'invention, après détection de la présence d'un piéton selon S1, des moyens de temporisation sont activés, paramétrés pour permettre le maintien de l'activation des moyens de signalisation pendant un délai Δt, et selon une sous-étape S43, considérer à la fin du délai Δt que la fin de la traversée est détectée.

Le procédé selon l'invention comprend en outre une étape d'activation S0 du module de détection 5, précédant l'étape de détection S1, comprenant les sous-étapes suivantes :
- S01 : Mesurer la luminosité ambiante grâce à un capteur de luminosité 211 ;
- S02 : Comparer la luminosité ambiante mesurée à un seuil de luminosité crépusculaire choisi ; et
- S03 : Si la luminosité ambiante mesurée est inférieure au seuil de luminosité crépusculaire, permettre l'activation des éléments d'éclairage bas 10 si un piéton est détecté.

Selon un premier mode alternatif de réalisation de l'invention, le procédé selon l'invention comprend une étape d'activation S0 du module de détection 5, précédant l'étape de détection S1, comprenant les sous-étapes suivantes :
- S01 : Mesurer les conditions de visibilité dans la zone de détection ;
- S02 : Comparer les mesures de visibilité à des seuils choisis ; et
- S03 : Si la visibilité mesurée est inférieure au seuil choisi, permettre l'activation des éléments d'éclairage bas 10 si un piéton est détecté.

Selon un second mode alternatif de réalisation de l'invention, le procédé selon l'invention comprend une étape d'activation S0 du module de détection 5, précédant l'étape de détection S1, comprenant les sous-étapes suivantes :
- S01 : Mesurer la luminosité ambiante grâce à un capteur de luminosité 211 et les conditions de visibilité dans la zone de détection ;
- S02 : Comparer la luminosité ambiante mesurée à un seuil de luminosité crépusculaire choisi et les mesures de visibilité à des seuils choisis ; et
- S03 : Si la luminosité ambiante mesurée est inférieure au seuil de luminosité crépusculaire, ou que la visibilité mesurée est inférieure au seuil choisi, permettre l'activation des éléments d'éclairage bas 10 si un piéton est détecté.

On réalise ainsi un système 1 capable de protéger un piéton 3 qui traverse un passage piéton 2 par l'éclairage au sol et l'enregistrement de la traversée, et de fiabiliser cette traversée par un signalement à destination des usagers de la route qui pourraient mal discerner un piéton 3, notamment dans l'obscurité et aussi lorsqu'il y a plusieurs piétons et/ou obstacles.

Le système 1 selon l'invention permet de réduire les chiffres liés aux accidents de la route impliquant les piétons car très performante sur la visualisation d'un piéton et le déclenchement des systèmes de signalisation, le système 1 formant une borne fine et à hauteur d'homme, envoyant des signaux simples et précis pour avertir d'un potentiel danger et signaler la présence d'un piéton aux usagers de la route..

## Revendications

1. [Procédé de détection et de signalement de l'engagement d'un obstacle sur un passage piéton (2), comprenant les étapes suivantes :
S1 : détecter la présence d'un obstacle au niveau du passage piéton et son environnement immédiat via un module de détection de présence (5) d'obstacle (3) ;
- S12 : Mesurer la température de l'obstacle (3) dans la zone du passage piéton (2) ainsi détecté ;
- S13 : déterminer la nature de l'obstacle (3) à partir de sa température, à partir d'une table de gammes de valeurs connues caractéristiques de potentiels obstacles ;
- S14 : Si la température mesurée correspond à la gamme de température d'un type d'obstacle à signaler, mettre en œuvre les étapes comprenant :
S2 :signaler aux usagers de la route la présence d'un obstacle sur le passage piéton via l'activation de moyens de signalement (9) comprenant l'activation d'un élément d'éclairage bas (10), apte à éclairer la chaussée et le passage piéton (2), et au moins un autre élément de signalisation (9) à destination des usagers de la route;
- S3 : Activer un enregistrement vidéo du passage piéton et de l'environnement immédiat du passage piéton dès que la présence d'un obstacle est détectée sur le passage piéton via une caméra (25).

2. Procédé selon la revendication 1, **caractérisé en ce qu'**il comprend une étape d'activation S0 du module de détection (5), précédant l'étape de détection S1, comprenant les sous-étapes suivantes :
- S01 : Mesurer les conditions de visibilité dans la zone de détection ;
- S02 : Comparer les mesures de visibilité à des seuils choisis ; et
- S03 : Si la visibilité mesurée est inférieure au seuil choisi, permettre l'activation des éléments d'éclairage bas (10) si un piéton est détecté.

3. Procédé selon la revendication 1, **caractérisé en ce qu'**il comprend une étape d'activation (S0) du module de détection (5), précédant l'étape de détection (S1), comprenant les sous-étapes suivantes :
- S01 : Mesurer la luminosité ambiante grâce à un capteur de luminosité (211) et les conditions de visibilité dans la zone de détection ;
- S02 : Comparer la luminosité ambiante mesurée à un seuil de luminosité crépusculaire choisi et les mesures de visibilité à des seuils choisis ; et
- S03 : Si la luminosité ambiante mesurée est inférieure au seuil de luminosité crépusculaire, ou que la visibilité mesurée est inférieure au seuil choisi, permettre l'activation des éléments d'éclairage bas (10) si un piéton est détecté.

4. Procédé selon l'une des revendications 1 à 3, **caractérisé en ce que** l'étape de signalement (S2) comprend les sous-étapes suivantes :
- S21 : Activer les moyens de signalement (9) pour les usagers de la route ; et
- S22 : Activer simultanément des moyens d'éclairage bas (10) aptes à éclairer le passage piéton.

5. Procédé selon l'une des revendications 1 à 3, **caractérisé en ce que** les étapes de signalement (S2) et d'enregistrement vidéo (S3) prennent fin lorsque le piéton n'est plus détecté dans la zone couverte par les moyens de détection.

6. Procédé selon l'une des revendications 1 à 4, **caractérisé en ce que** l'étape S2 comprend la sous étape suivante :
- activer (S15) les moyens de communication du système, et communiquer les instructions de signalisation d'un piéton au niveau de la zone du passage piéton à au moins un dispositif tiers.

7. Système (1) de détection et de signalement de l'engagement d'un obstacle sur un passage piéton (2) permettant la mise en œuvre du procédé selon les revendications 1 à 4, comportant :
- un module de détection de présence (5), apte à détecter la présence d'un obstacle au niveau du passage piéton et de son environnement immédiat comportant un capteur infrarouge (15), apte à déterminer la température d'un obstacle (3) ainsi détecté ;
- des moyens de signalement (9), aptes à permettre le signalement aux usagers de la route de la présence d'un obstacle présent sur le passage piéton, et permettre à l'usager de la route de distinguer ledit passage piéton depuis une distance choisie, et comprenant un élément d'éclairage bas (10), apte à éclairer la chaussée et le passage piéton (2), et au moins un autre élément de signalisation (9) ;
- une caméra (25) apte à permettre l'enregistrement vidéo du passage piéton et de son environnement immédiat dès qu'un obstacle à signaler est détecté ; et
- des moyens de traitement (100) aptes à détecter la présence d'un obstacle au niveau du passage piéton ou son environnement immédiat via un module de détection de présence (5) d'obstacle (3), déterminer la nature de l'obstacle (3) à partir de sa température, à partir d'une table de gammes de valeurs connues caractéristiques de potentiels obstacles, si la détection d'obstacle est positive, et la température mesurée correspond à la gamme de température d'un type d'obstacle à signaler, et apte à signaler aux usagers de la route la présence d'un obstacle sur le passage piéton via l'activation d'un élément d'éclairage bas 10, apte à éclairer la chaussée et le passage piéton 2, et au moins un autre élément de signalisation (9);et activer un enregistrement vidéo du passage piéton et de l'environnement immédiat du passage piéton dès que la présence d'un obstacle est détectée sur le passage piéton via une caméra (25).

8. Système (1) selon la revendication 7, **caractérisé en ce qu'**il comprend en outre un détecteur de luminosité (211) apte à mesurer la luminosité ambiante autour du système (1).

9. Système (1) selon la revendication 7 ou 8, **caractérisé en ce qu'**il comprend en outre moins un capteur de visibilité (51), configuré pour fournir des données de visibilité optique basées sur la réflexion de la lumière ainsi que la quantité de lumière, et mesurant la visibilité atmosphérique à partir de la lumière diffusée.

10. Système (1) selon l'une des revendications 7 ou 8, **caractérisé en ce que** les moyens de signalement (9) comprennent en outre au moins un élément d'éclairage bas (10), apte à éclairer la chaussée et le passage piéton (2), et au moins un élément appartenant au groupe formé par panneau signalétique (11), balise à diode électroluminescente (12), bande de plusieurs diodes électroluminescentes (13).

11. Système (1) selon l'une des revendications 7 à 10, **caractérisé en ce que** le module de détection (5) appartient au groupe formé par détecteurs visuels, à émission infrarouge, radar, sonar.

12. Système (1) selon l'une des revendications 7 à 11, **caractérisé en ce qu'**il comprend des moyens de communication, aptes à transmettre un statut de détection d'un piéton dans la zone de détection à un dispositif tiers.

13. Système (1) selon la revendication 12, **caractérisé en ce que** le dispositif tiers appartient au groupe formé par ordinateur de bord, smartphone intégrant une application d'itinérance, au moins un autre système (1) selon l'invention.

14. Système (1) selon l'une des revendications 7 à 13, **caractérisé en ce qu'**il est configuré pour être connecté à au moins un autre système (1) via les moyens de communications, formant un même groupe de systèmes (1), et apte à signaler de manière simultanée la présence d'un piéton détectée par un des systèmes (1) à l'ensemble des membres du groupe.

15. Système (1) selon l'une des revendications 7 à 14, **caractérisé en ce que** les moyens de signalisation (9) sont activables de jour et de nuit.
